Europäisches Patentamt

European Patent Office

Office européen des brevets

(19)

(11) Publication number: 0 369 622
A2

## EUROPEAN PATENT APPLICATION

(21) Application number: 89310969.4

(51) Int. Cl.⁵: G06K 7/08

(22) Date of filing: 24.10.89

(30) Priority: 09.11.88 US 269962

(43) Date of publication of application:
23.05.90 Bulletin 90/21

(84) Designated Contracting States:
AT BE CH DE ES FR GB GR IT LI LU NL SE

(71) Applicant: Security Tag Systems Inc.
1615 118th Avenue North
St. Petersburg Florida 33702(US)

(72) Inventor: McCarron, Robert L.
4728 Northwest 34th Place
Gainswllie Florida 32606(US)
Inventor: Charlot, Lincoln H., Jr.
1615 118th Avenue North
St. Petersburg Florida 33702(US)

(74) Representative: Wilson, Nicholas Martin et al
WITHERS & ROGERS 4 Dyer's Buildings
Holborn
London EC1N 2JT(GB)

(54) Proximity reading of coded tag.

(57) In a proximity-reading coded-tag system, a coded tag (10) responds to a high-frequency interrogation signal by providing a binary signal of a predetermined low frequency and bearing a code that is unique to said tag; and by transmitting a high-frequency response signal of a given high frequency, with the response signal being modulated with the uniquely coded low-frequency binary signal; and a coded-tag reader (12, 12a) receives and demodulates the high-frequency response signal to detect the uniquely coded low-frequency binary signal. The modulator (24) of the coded tag modulates the response signal by shifting the center frequency of the response signal during each pulse of the low-frequency uniquely coded binary signal to thereby vary the amplitude at the given high frequency in the response signal in accordance with said unique binary code and at the rate of the predetermined low frequency; and the demodulator (36, 37) of the coded-tag reader is tuned to the predetermined low frequency of the coded binary signal for detecting the unique binary signal code in accordance with amplitude or phase variations at the given high frequency in the received high-frequency response signal caused by the frequency shifting.

FIG. 1

## PROXIMITY READING OF CODED TAG

## BACKGROUND OF THE INVENTION

The present invention generally pertains to electronic communications and is particularly directed to an improvement in proximity reading of coded tags.

Coded tags are used for identifying persons and such objects as goods and vehicles. Coded-tag readers have been developed for reading coded tags in the proximity of the reader so that the coded tag need not make contact with the reader. In a security access system, in which a coded tag is embodied in a personal identification card, proximity reading of the coded tag enables the reader to be positioned at a location where it cannot be tampered with and/or where it is not subjected to foreign matter, such as dirt that might interfere with its operation. In an inventory control system, in which coded tags are affixed to goods, identity of the goods is more conveniently read by proximity reading of the coded tags in contrast to requiring the reader to make contact with each tag.

In prior art systems for proximity reading of coded tags the coded-tag reader reads a coded signal that is transmitted from the coded tag in response to an interrogation signal. In one such system, each tag contains a plurality of resonant circuits that are tuned to different radio frequencies (RF). An interrogation signal that sweeps the RF range of these resonant circuits causes the tag to transmit signals at each of the resonant frequencies. Each tag has a different combination of resonant frequencies to thereby establish a unique code for each tag.

In another prior art system, the coded tag includes a CMOS microchip having a memory that stores a binary code that is unique to the tag. A binary signal bearing the unique code is read out of the memory by a counter/decoder in response to a clock signal derived from a 400 kHz electromagnetic interrogation signal transmitted by a coded-tag reader. The tag provides a response signal by generating an electrostatic field and modulating the electrostatic field with the uniquely coded binary signal at one-half the frequency of the RF interrogation signal. The tag is powered by the energy of the interrogation signal. The response signal is detected by a coded-tag reader that is electrostatically coupled to the coded tag when the tag is positioned proximate to the coded-tag reader. The coded-tag reader includes a magnetic excitation coil that is driven in a resonant mode by an oscillator to provide the transmitted RF interrogation signal, and a capacitive-plate antenna located near the excitation coil for detecting the response signal that is electrostatically coupled from a proximate coded tag. The detected response signal is amplified and demodulated by the reader to recover the coded binary signal that is unique to the coded tag. A microprocessor in the reader formats the recovered coded binary signal for further data processing.

In still another prior art system, a battery-powered coded tag is activated when in the presence of a low-frequency electric field, and responds to such activation by transmitting a binary signal bearing a code that is unique to the tag to an inductively coupled coded-tag reader at a rate of up to 1000 characters per second.

## SUMMARY OF THE INVENTION

The present invention provides a coded-tag system, in which a coded tag responds to a high-frequency interrogation signal by providing a binary signal of a predetermined low frequency and bearing a code that is unique to the tag; and by effectively transmitting the unique binary code at the predetermined low frequency to a coded-tag reader by using the uniquely coded binary signal to vary the energy at a given high frequency in a high-frequency response signal that is sent by the coded tag to the coded tag reader. The energy of the given high-frequency response signal is varied in accordance with the predetermined low-frequency unique binary code to produce a low-frequency amplitude variation at the given high frequency in the given high-frequency response signal. The given highfrequency response signal is demodulated by the coded tag reader to detect the low-frequency unique binary code. Accordingly, small, high-frequency circuit components may be used in the tag for receiving the interrogation signal and transmitting a response thereto; while at the same time less expensive low-frequency circuit components may be used in the coded-tag reader for detecting the low-frequency unique binary code.

Preferably, the modulator of the coded tag modulates the response signal by shifting the frequency of the response signal during each pulse of the low-frequency uniquely-coded binary signal to thereby vary the amplitude of the response signal in accordance with said unique binary code and at the rate of the predetermined low frequency; and the demodulator of the coded-tag reader is bandwidth limited to the predetermined low frequency of the coded binary signal for detecting the unique binary signal code in accordance with amplitude variations in the received high-frequency response signal caused by the frequency shifting. In an alternative embodiment, the coded tag reader utilizes phase detection for detecting the unique binary signal code in accordance with phase variations in the received high-frequency response signal caused by the frequency shifting.

Additional features of the present invention are described in relation to the description of the preferred embodiment.

## BRIEF DESCRIPTION OF THE DRAWING

Figure 1 is a diagram of a preferred embodiment of the system of the present invention.

Figure 1A is a diagram of an alternative embodiment of the coded-tag reader portion of the system of Figure 1.

Figures 2A and 2B illustrate the effect of frequency shifting upon the amplitude of the response signal at the given high frequency.

Figure 3 illustrates the waveform of the low-frequency uniquely-coded binary signal detected by the coded-tag reader shown in Figure 1.

## DESCRIPTION OF THE PREFERRED EMBODIMENT

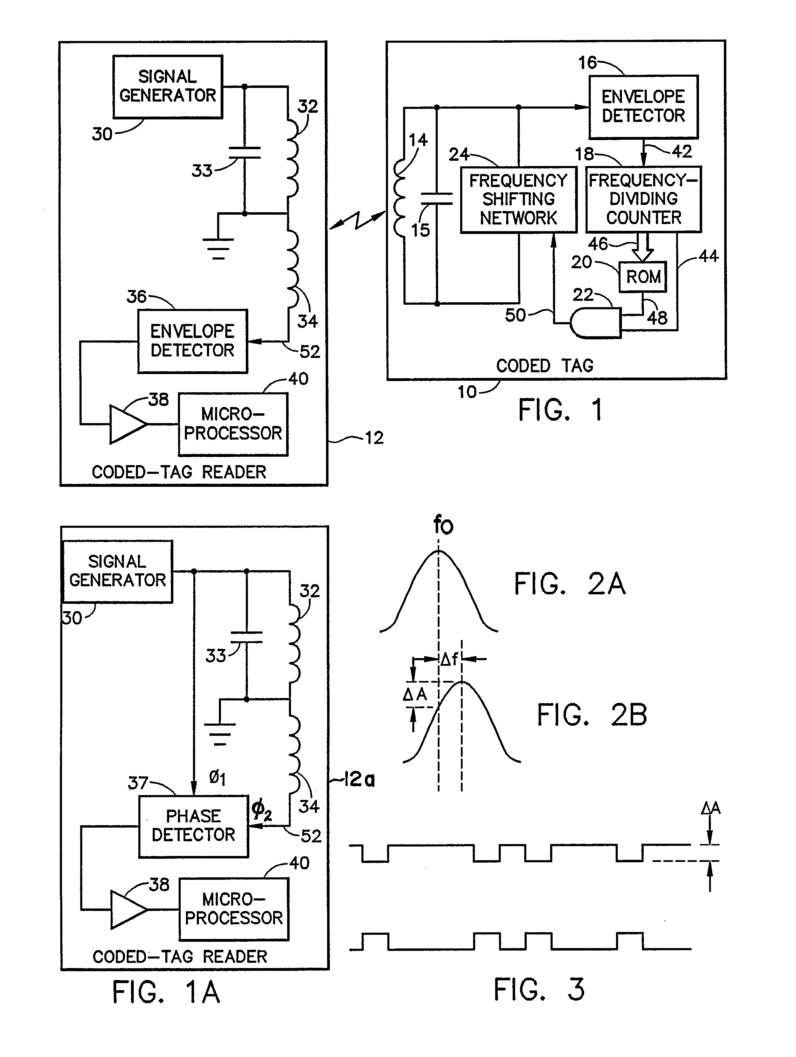

Referring to Figure 1, a preferred embodiment of the system of the present invention includes a coded tag 10 and a coded-tag reader 12.

The coded tag 10 includes a resonant circuit defined by a parallel combination of a receiving coil 14 and a capacitance 15, an envelope detector 16, a frequency-dividing counter 18, a read-only memory (ROM) 20, a binary signal generator 22, and a frequency-shifting network 24. In the preferred embodiment, the ROM 20 is a CMOS PROM; and the transmitting/receiving coil 14 is a high-frequency printed-circuit coil.

The coded-tag reader 12 includes a signal generator 30, a transmitting coil 32 connected in parallel with a capacitor 33, a receiving coil 34 inductively coupled to the transmitting coil 32, an envelope detector 36, an amplifier 38 and a microprocessor 40. The signal generator 30 generates a high-frequency interrogation signal, which is transmitted from the transmitting coil 32. In the preferred embodiment, the interrogation signal is a 13.56 MHz carrier signal modulated with a pulsed signal having a frequency of 105.94 kHz.

In the coded tag 10, the interrogation signal is received by the resonant circuit 14, 15; and the envelope detector 16 detects the pulsed signal used to modulate the interrogation signal. The envelope detector 16 provides the detected pulsed signal on line 42 to the frequency-dividing counter 18. The frequency-dividing counter 18 divides the frequency of the pulsed signal to provide a low-frequency drive signal on line 44. The counter 18 also provides an address on lines 46 to the ROM 20 to read a unique binary code out of the ROM 20 on line 48. The binary signal generator 22 generates a binary signal on line 50 at the rate of the low-frequency drive signal on line 44 and bearing the unique binary code read out of the ROM 20 on line 48.

The coded tag 10 is energized by the received interrogation signal; and the resonant circuit 14, 15 transmits a high-frequency response signal at its given resonant frequency of 13.56 as modulated by the frequency-shifting network 24 in response to the uniquely coded binary signal on line 50. In the preferred embodiment, the frequency-dividing counter 18, divides the detected 105.94 kHz pulsed signal on line 42 by 256 to provide a 413.82 Hz low-frequency drive signal on line 46. Accordingly, the center frequency of the given high-frequency response signal received by the resonant circuit 14, 15 is shifted at the low-frequency rate of 413.82 Hz during each pulse of the uniquely coded binary signal on line 50. The effect of such frequency shift is to vary the amplitude at the given high frequency $f_0$ in the high-frequency response signal received by the coded tag reader 12 by an amount $\Delta A$ when the center frequency of the high-frequency response signal is shifted from the given frequency $f_0$ by an amount $\Delta f$, as illustrated in Figures 2A and 2B. Figure 2A illustrates the high-frequency response signal centered at the given frequency $f_0$; and Figure 2B illustrates the high-frequency response signal centered at a frequency $f_0 + \Delta f$. Note that the amplitude of the frequency-shifted response signal at the given frequency $f_0$, as shown in Figure 2B is $\Delta A$ less than the amplitude of the unshifted response signal centered at the given frequency $f_0$, as shown in Figure 2A.

In effect, the low-frequency binary code is transmitted to the coded-tag reader 12 by varying the energy absorption at the given high frequency $f_0$ between the the coded tag 10 and the coded tag reader 12 in accordance with the unique binary code to provide an amplitude variation in the energy absorption, which is demodulated by the coded tag reader 12 to detect the low-frequency unique binary code.

In the coded-tag reader 12, the amplitude variation caused by the frequency-shifting action of the coded tag 10 is sensed by the receiving coil 34 and applied to the envelope detector 36 on line 52.

The envelope detector 36 demodulates the received high-frequency response signal on line 52 by detecting the low-frequency amplitude variations at the given high frequency $f_0$ in the received high-frequency response signal caused by the shifting of the center frequency of the response signal by the frequency-shifting network 24 of the coded tag 10, as described above. The envelope detector 36 of the coded-tag reader is bandwidth limited to the predetermined low frequency (413.82 Hz) of the uniquely coded binary signal and thereby ignores the high-frequency interrogation signal that is provided by the transmitting resonant circuit 32, 33 of the coded-tag reader 12. The amplitude variations detected by the envelope detector 36 of the coded-tag reader 12 thus define a detected uniquely-coded binary signal (as shown in Figure 3), which is provided on line 54 to the amplifier 38 and thence to the microprocessor 40.

The microprocessor 40 processes the detected uniquely-coded binary signal to provide the the unique binary code that was read out of the ROM 20 of the coded tag 10.

In an alternative preferred embodiment of a coded-tag reader 12a, as shown in Figure 1A, a phase detector 37 is substituted for the envelope detector 36 of the coded-tag reader 12 shown in the embodiment of Figure 1; and the phase detector compares the phase $\theta_1$ of the interrogation signal provided on line 53 by the signal generator 30 with the phase $\theta_2$ of the received high-frequency response signal on line 52. In other respects, the coded-tag reader 12a shown in Figure 1A is the same as the coded-tag reader 12 included in the system of Figure 1.

The phase detector 37 is tuned to the predetermined low frequency and thus demodulates the received high-frequency response signal on line 52 by providing a detected binary signal to the amplifier 38 that includes amplitude variations in accordance with the low-frequency phase variations in the response signal on line 52 caused by the low-frequency shift variations in the high-frequency response signal transmitted by the coded tag 10.

An advantage provided by the coded-tag reader 12a of Figure 1A is to prevent amplitude noise from the signal generator 30 from being added to the detected binary signal provided to the amplifier 38.

## Claims

1. A system, comprising
a coded tag (10), including
means (18, 20, 22) for responding to a high-frequency interrogation signal by providing a binary signal of a predetermined low frequency and bearing a code that is unique to said tag;
means (14, 15) for transmitting a high-frequency response signal of a given frequency; and
means (24) for modulating the high-frequency response signal with the uniquely coded low-frequency binary signal by varying the energy at the given high frequency in the given high-frequency response signal in accordance with the predetermined low-frequency unique binary code to produce a low-frequency amplitude variation at the given high frequency in the given high-frequency response signal, to thereby effectively transmit the unique binary code at the predetermined low frequency; and
a coded-tag reader (12, 12a) including
means (33, 34, 36, 37, 40) for receiving the given high-frequency response signal and for demodulating said received response signal to detect said low-frequency unique binary code.

2. A system according to Claim 1, wherein the modulating means of the coded tag comprises
means (24) for modulating said high-frequency response signal by shifting the center frequency of said response signal during each pulse of said uniquely coded low-frequency binary signal to thereby vary the amplitude at the given high frequency in the response signal in accordance with said unique binary code and at the rate of said predetermined low frequency; and
wherein the demodulating means of the coded-tag reader comprises
means (36) tuned to the predetermined low frequency for detecting said unique binary signal code in accordance with amplitude variations at the given high frequency in said received high-frequency response signal caused by said frequency shifting.

3. A system according to Claim 1, wherein the modulating means of the coded tag comprises
means (24) for modulating said high-frequency response signal by shifting the center frequency of said response signal during each pulse of said uniquely coded low-frequency binary signal to thereby vary the amplitude at the given high frequency in the response signal in accordance with said unique binary code and at the rate of said predetermined low frequency; and
wherein the demodulating means of the coded-tag reader comprises
means (37) tuned to the predetermined high frequency for detecting said unique binary signal code in accordance with phase variations at the given high frequency in said received high-frequency response signal caused by said frequency shifting.

4. A system according to Claim 1, wherein the coded-tag reader further comprises
means (32, 33) for transmitting said interrogation signal.

5. A system according to Claim 1 or 4, wherein the transmitting means of the coded tag comprises a high-frequency-printed-circuit coil (14) for receiving said interrogation signal and transmitting said response signal.

6. A coded tag (10), comprising

means (18, 20, 22) for responding to a high-frequency interrogation signal by providing a binary signal of a predetermined low frequency and bearing a code that is unique to said tag;

means (14, 15) for transmitting a high-frequency response signal of a given frequency; and

means (24) for modulating the high-frequency response signal with the uniquely coded low-frequency binary signal by varying the energy at the given high frequency in the given high-frequency response signal in accordance with the predetermined low-frequency unique binary code to produce a low-frequency amplitude variation at the given high frequency in the given high-frequency response signal, to thereby effectively transmit the unique binary code at the predetermined low frequency.

7. A coded tag according to Claim 6, wherein the modulating means comprises

means (24) for modulating said high-frequency response signal by shifting the center frequency of said response signal during each pulse of said uniquely coded low-frequency binary signal to thereby vary the amplitude at the given high frequency in the response signal in accordance with said unique binary code and at the rate of said predetermined low frequency.

8. A coded tag according to Claim 6, wherein the transmitting means comprises

a high-frequency-printed-circuit coil (14) for transmitting said response signal.

9. A coded-tag reader (12) for reading a unique binary code transmitted by a coded tag that modulates a high-frequency response signal of a given high frequency by varying the energy at the given high frequency in the given high-frequency response signal in accordance with a predetermined low-frequency unique binary code to produce a low-frequency amplitude variation at the given high frequency in the given high-frequency response signal, to thereby effectively transmit the unique binary code at the predetermined low frequency, said coded-tag reader comprising

means (33, 34) for receiving the given high-frequency response signal and;

means (36, 40) for demodulating said received response signal to detect said low-frequency unique binary code by detecting amplitude variations at the given high frequency in the received high-frequency response signal.

10. A coded-tag reader according to Claim 9, wherein the demodulating means comprises

means (36) tuned to the predetermined low frequency for detecting said unique binary code in accordance with the low-frequency amplitude variations in said received high-frequency response signal.

11. A coded-tag reader (12a) for reading a unique binary code transmitted by a coded tag that modulates a high-frequency response signal of a given high frequency by varying the energy at the given high frequency in the given high-frequency response signal in accordance with a predetermined low-frequency unique binary code to produce a low-frequency amplitude variation at the given high frequency in the given high-frequency response signal, to thereby effectively transmit the unique binary code at the predetermined low frequency, said coded-tag reader comprising

means (33, 34) for receiving the given high-frequency response signal and;

means (37, 40) for demodulating said received response signal to detect said low-frequency unique binary code by detecting phase variations at the given high frequency in the received high-frequency response signal.

12. A coded-tag reader according to Claim 11, wherein the demodulating means comprises

means (37) tuned to the predetermined low frequency for detecting said unique binary code in accordance with the low-frequency phase variations in said received high-frequency response signal.

FIG. 1

CODED TAG

CODED-TAG READER

FIG. 1A

CODED-TAG READER

FIG. 2A

FIG. 2B

FIG. 3